# EUROPEAN PATENT APPLICATION

(11) **EP 0 759 537 A2**
(43) Date of publication of application: **26.02.1997**
(21) Application number: 96305748.4
(22) Date of filing: 05.08.1996
(51) Int. Cl.: G01B 7/34

(54) **A scanning force microscope with optical device**

(30) Priority: 18.08.1995 US 516771
(71) Applicant: Gamble, Ronald C., Altadena, California 91001 (US)
(72) Inventor: Gamble, Ronald C., Altadena, California 91001 (US)
(74) Representative: Price, Nigel John King

(57) **Abstract**

A scanning force microscope is disclosed which includes integrated optics for viewing the optical lever arm, probe and sample to be examined. The scanning force microscope includes a simplified mounting of laser and related adjustments and the locating of a detector independent of the scanner, to improve ease of handling and providing convenient locations for adjustments. In one preferred embodiment of the scanning force microscope, the surface of samples may be imaged while the cantilever portion of the scanner is immersed in liquids without special set-up or special adapters.

## Description

This invention relates generally to scanning force microscopes, and more particularly to such a microscope with an independent stationary photodetector located away from a scanner, which allows the surface of samples to be imaged while the cantilever portion of the scanner is immersed in liquids without special set-up or special adapters.

Scanning force microscopes (SFM), also known as atomic force microscopes (AFM), are useful for imaging objects as small as atoms. The scanning force microscope is closely related to the scanning tunneling microscope (STM) and the technique of stylus profilometry. However, in a typical scanning force microscope, deflection of a laser beam by a vertical movement of a probe following the contours of a specimen is amplified by a reflective lever arm to which the probe is mounted. The deflection of the laser beam is typically monitored by a photodetector in the optical path of the deflected laser beam, and the sample is mounted on a stage moveable in minute distances in three dimensions so that the sample can be raster scanned while the vertical positioning of the probe relative to the surface of the sample is maintained substantially constant by a feedback loop with the photodetector controlling the vertical positioning of the sample. Thus the SFM maps a spatially varying surface into an image.

The sample is mounted on piezo-ceramic transducers in such a way that the X-Y dimensions can be scanned as a raster and the Z dimension controlled through the feedback loop with the photodetector such that the tip maintains a constant force on the surface. Appropriate control electronics and computers are integral to the instrument and are used to control all movements and to acquire and display data.

The probe consists of a cantilever with a sharp tip located orthogonally on one end of the cantilever, in, or nearly in, contact with the surface to be profiled or otherwise examined.

The cantilever has such a small spring constant that typically less than one nanonewton of force will cause a noticeable deflection. The cantilever deflects due to natural forces present between the tip and the sample. The probe may be either attracted to the surface or repelled by the surface depending on the forces at work. When relative motion in the X and Y directions exists between the probe and the sample surface, the cantilever will bend as topographical features of the sample move under the tip.

Such scanning force microscopes are useful for imaging a sample which is moved in three dimensions by the scanning assembly moving the sample. However, this conventional design is only useful for samples which are comparatively small or which can be cut small enough from a larger specimen to be examined on the scanning stage of the microscope. Such samples typically must also weigh about a gram or less, in order to accommodate the relatively high scan rates without causing distortion due to resonance effects. Although previous designs for a free standing scanning force microscope include a scanning mechanism and sensor element for scanning large samples, they are difficult to operate and employ a sensor head force on a sample which prohibits use of the microscope for scanning many polymers and biological molecules without the use of special adapters or set-up, such as the use of sealed liquid cells.

It would, therefore, be desirable to provide a scanning force microscope with the capability of scanning a sample in contact with a fluid, without the preparation of special fluid cells or special adapters. This capability would be particularly useful in some applications, as such a fluid environment can significantly change scanning conditions and opportunities, and can improve the quality of the image of the sample developed by the instrument.

In conventional scanning force microscopes, a probe can be damaged by too abrupt an approach to a sample before feedback position control is actually engaged. The user typically can not easily view the approach of the lever arm and probe assembly to the surface of the sample to insure precise positioning of the probe. Even where an optical microscope is used in conjunction with the scanning force microscope to view the sample, the arrangement of the optical microscope with the scanning force microscope can be inconvenient and clumsy, and can interfere with the operation of the scanning force microscope. It would further be desirable to position X, Y, and Z scanning elements (e.g., piezo drives) in locations protected from abuse. The present invention meets these needs.

Existing SFM designs require that the operating characteristics of the tube pieces remain precisely the same. Present designs further suffer from the handicap that the cantilever is placed in precisely the same position at the end of the tube. Other existing designs are limited by the fact that the scanning head is entirely integral, not permitting scanners with different scan ranges to be used.

One common instrument design uses an optical lever arm to amplify the very small vertical motions as the contacting probe follows the contours of a surface. A sharp tip, located at the bottom end of a very small spring-board cantilever, is brought into contact with the surface to be scanned. The defection of the cantilever is monitored by a laser diode light beam which focuses onto the upper side of the end of the cantilever and reflects back onto a photodetector. Existing instruments using the optical lever arm design have several shortcomings from the user's point of view. Design simplicity, machine robustness and user friendliness are often short changed in existing designs.

Another SFM has been proposed, based upon the work of Jung and Yaniv (Elect. Ltrs. 29-3, 264-266 (1993)). This SFM obtains stationary sample stages with an optical-lever means, but uses different scanning means with correspondingly different piezo transducers. The scanning range is not limited by the size of the mirror deflecting the scanning beam, but can be extended further than previous designs until limited by the sensitivity of the piezo transducers.

Other designs require the sample to be physically attached to the scanner. Changing the scanner therefore requires the removal of the sample and reassembly of the SFM -- a great inconvenience.

Another SFM has been introduced with a scanning mechanism and sensor element integrated into a package for scanning large samples. The SFM is based on the work of Hansma, et.al., (J. Appl. Phys. 76, 796-799 (1994)) and incorporates a means for tracking the beam from a stationary laser onto a cantilever located at the end of a piezo tube scanner. Tracking of the beam on the cantilever is accomplished by placing a lens within the piezo tube approximately mid-way such that as the tube scans, the laser beam remains focused on the cantilever. The deflected beam is collimated by a lens onto a stationary split detector for sensing the small deflections of the cantilever.

Such an arrangement operates in a rudimentary fashion, provided that the operating characteristics of the piezo tube remain precisely the same and provided that the cantilever is placed in precisely the same position at the end of the tube. Both of these constraints pose potential problems. The Hansma approach does solve the problem of relative motion between the focused spot on the specimen and cantilever. However, this design is limited in several ways. Some of these problems are alluded to in Hansma's paper (p.796). For example, alignment of the laser beam onto the cantilever is difficult, requiring the user of the machine to "pre-align" the cantilever onto a holder which is then carefully placed at the end of the tube scanner. Also, the piezo tube length must be relatively long (at least five centimeters) in order to obtain a large scan range of approximately 100 X 100 microns. This greater size in turn aggravates errors resulting from thermal drift effects. Such a long tube compromises the scanner's response to high frequencies, and lowers the resonant frequency, resulting in a limited scanning range. The piezo transducer scanner movement in the Z, or vertical, dimension is limited to about five microns only with this design. Such limited vertical movement means that the device's utility in practice is marginal. In addition, such a piezo tube requires high voltage or amps, which increase the cost and complexity of the electronics interface.

The Hansma approach also suffers from the fact that the scanning head is not entirely integral, not permitting scanners with different scan ranges to be used.

U.S. Patent 5,157,251 refers to an SFM having a movable specimen holder housed in the base of the SFM and positioned relative to a probe housed in a sensor head. The specimen is monitored by an optical deflection detection system. This design, though, suffers from the drawback that only small specimens can be examined. Because the scanner is fixed while the specimen is moved, only specimens small enough to fit within the specimen holder can be scanned. Additionally, no liquid cells or specimens in liquid may be scanned because of the inability to seal the specimen in a fluid or gaseous environment.

U.S. Patent 5,291,775 relates to an SFM which includes integrated optics for viewing the optical lever arm, probe and sample and incorporates an improved mount for the probe, which is magnetically secured to the stationary body of the SFM to improve the ease of handling. With this SFM the cantilever is stationary while the specimen is scanned. This design, however, does not allow the scanning of samples immersed in liquids without the use of special set-ups or adapters. Moreover, because the detector is an integral part of the scanning assembly, it requires that the cantilever be placed in exactly the same position at the end of the tube. Consequently, this design only allows the scanning of a relatively small specimen. In addition, the specimen is not easily viewed by the unaided eye when the SFM is in scanning position. Moreover, viewing of the specimen with an optical microscope is only permissible at a maximum of 45 degrees.

U.S. Patent 5,319,960 describes a sensor module for SFM designs which uses integrated scanning drivers to allow the examination of varying sizes and weights of specimen. This module, however, does not address larger design drawbacks such as requiring the use of a fixed scanner. Similarly, the module does not ameliorate the difficulties associated with having the cantilever positioned in one fixed location at the end of the tube. Also, because the structure containing the laser, cantilever and detector is relatively large, the scan rate of the specimen in the X, or horizontal, and Y, or lateral, dimensions is severely limited owing to corresponding resonance effects. In addition, the design is somewhat delicate in operation. Inadvertent misuse can result in damage to the Z or vertical, piezo driver. As before, direct viewing of the specimen is not possible while the microscope is in the scanning position. Similarly, viewing of the specimen with an optical microscope is only possible up to a 45 degree angle. In addition, because the mechanical loop between the cantilever tip and the specimen surface is relatively great, errors resulting from thermal drift effects in the X, Y and Z dimensions are more likely.

U.S. Patent 5,388,542 is directed to an SFM with a piezo-ceramic tube with means to allow the probe at its free end to move in the X, Y and Z directions. This design is substantially similar to the Hansma design and therefore does not address the disadvantages which afflict that design as discussed above. While the design may be conceptually appealing, in practice it may be difficult to maintain beam alignment with varying types and sizes of cantilevers. Typically, different cantilevers must be employed for different scanning modes and different types of microscopy.

U.S. Patent 5,406,833 relates to an SFM with a "spring element" with a detecting tip whose displacement is determined by irradiating a laser beam onto the rear surface of the spring element and detecting the displacement using a multi-segmented photodetector. This complex design, however, suffers from multiple resonant frequencies resulting from the module's relatively great size. In addition, no top viewing is possible at a high angle, although viewing at approximately 45 degrees may be possible.

U.S. Patent 5,408,094 similarly relates to an SFM which instead uses a cantilever with a detecting tip on the free end and a reflective surface on the rear of the tip. This design similarly is affected by multiple resonance frequencies caused by its relatively large structure. Greater disadvantage, though is that this SFM can operate with limited scan ranges. This occurs because of the difficulty in maintaining the light beam on the detector. Also, the design requires that the objective lens for viewing the sample is integral to the scanner, thus not allowing for change in magnification or for the use of specialized multiple lens optics that are typically incorporated into high quality microscopes. The integral "half-mirror" in the design further limits the quality of the viewing image.

The present invention provides an improved free standing type scanning force microscope with a separate photodetector located apart from the scanner for examination of an extremely wide range of sizes and weights of a stationary specimen, with the capability of scanning a sample in contact with a fluid, by means of a double-membrane liquid cell.

The invention accordingly provides a scanning force microscope for examining surface contours of a stationary specimen. The microscope preferably includes a main body having a base adapted to be positioned on a substrate for examination of the specimen, and scanning means with scanning drivers integrated into the microscope to scan a sensor probe of the microscope in three dimensions or degrees of freedom relative to the stationary specimen. While the present invention uses piezo drivers each of which is comprised of integrally-formed stacked piezo elements, other types of piezos, including piezo tubes could be used. The scanning means is secured to the main body by a scanner pivot secured to the main body. The scanning means therefore moves in two degrees of freedom relative to the scanner pivot.

A light source means, preferably a laser, is also provided in the main body of the microscope to produce a focused light beam directed at and deflected by the optical lever arm onto a photodetector means. A mirror is preferably used to deflect the light beam from the light source means onto the optical lever arm means. Use of a mirror allows the SFM to be more compact, but is otherwise not needed.

A sensing means refers to the means by which a particular surface property is detected during scanning, which includes a probe at or near the surface that limits the area in which the property will be measured. The sensing means also includes, at a minimum, a transducing element which converts the relative magnitude of the property into an electrical signal which can be further manipulated or recorded. Sensing means other than the typical use of cantilever sensing elements are those exploiting the reflecting of light from other reflecting elements, the piezoelectric effect, the piezoresistive effect, use of resonating elements such as the amplitude and frequency shifts indicative of the probe's interaction with the surface properties of the specimen, photodiode and photoelectric effects.

The optical lever arm preferably includes a reflective cantilever having a free end to which the probe tip is mounted. The sensor probe means preferably is controlled by integrated piezo drivers in the microscope to contact and follow the surface contours of the specimen with a substantially constant amount of force. The optical lever arm means preferably includes a reflective surface means mounted within the body to deflect the light beam from the optical lever arm means to the photodetector.

Photodetector means are provided separate and apart from the main body of the microscope to receive the deflected light beam and to produce an output signal indicative of the degree of deflection of the light beam by the optical lever arm means. Control means are also provided for maintaining an approximately constant force of the probe against the surface contours or interactive forces of the specimen.

The double membrane liquid cell preferably provides a glass window through which the laser light can enter, be deflected from the cantilever, and exit upwards through the window to the photodetector. The window also allows direct viewing of the specimen. The specimen may be imaged while immersed in liquid within the cell. The liquid is contained by means of a deformable membrane or spacer. In this preferred embodiment of the microscope, the surface of specimens can be imaged while the cantilever portion of the scanner is immersed in liquids without the need for prior special adjustment configurations or devices. Means for viewing the optical lever arm, probe means, and an adjacent specimen may also be provided.

Accordingly, in addition to the objects and advantages of the SFM with integral laser - scanner - cantilever and independent stationary photodetector described above, several objects and advantages of the current invention are:
1) the sensing means (light source, optical lever arm, probe and photodetector) and scanning elements (piezo drivers) are located above a stationary sample of any size. The design incorporates two sets of X, Y and Z piezo drivers, such that the area scanned can range from a few nanometers to 100 microns square. The vertical resolution allows imaging of atoms as well as contours of several microns.
2) minimizing moving parts related to the scanner, particularly, a) simplified mounting of laser and related adjustments and b) locating the detector off the scanner.
3) positioning X, Y, and Z piezo drivers in locations protected from abuse.
4) providing convenient locations for adjustments and capability for viewing the sample and cantilever with high quality optics.
5) the surface of samples may be imaged while the cantilever portion of the scanner is immersed in liquids without special set-up or special adapters because of viewing at a high angle, such as the use of sealed liquid cells. This is a major enhancement, as scanning biological samples under physiological conditions represents a major market need.
6) the current invention is easier to use than existing designs because the SFM incorporates a stationary detector but allows for the scanner to be changed.

Further objects and advantages are provided by two other design advantages which facilitate the microscope's ease-of-use:
7) because of the short pivot length, a standard high quality optical microscope, placed at approximately 10 degrees from vertical and adjacent to the scanner pivot, can be used to observe the cantilever and sample during adjustments and while scanning. This is a very important feature for users who first scan large areas optically and then need to use a scanning probe microscope (SPM) to visualize smaller regions of interest.
8) the straddled superstructure in the immediate vicinity of the cantilever is minimal, allowing for excellent direct view of the cantilever and sample, as well as the capability for modifying the scanner for viewing the sensing means for other types of SPM including SFM in either contact, intermittent-contact, or non-contact modes, scanning tunneling microscopy, electrochemistry AFM and STM, near-field scanning optical microscopy, scanning thermal microscopy, scanning magnetic force microscopy, scanning electrostatic microscopy, and related techniques. With the use of an optical microscope the sample may be viewed at an angle of 90 degrees from the scanner pivot.

These and other objects and advantages of the invention will become apparent from the following detailed description, and the accompanying drawings, which illustrate by way of example the features of the invention.
FIG. 1 is a top view displaying the straddled superstructure of the invention, which is applicable not only to scanning force microscopy, but to other related arts as well. For reference, the X and Y motions of the cantilever probe is marked. The Z motion is into and out of the paper.
FIG. 2 is a side view perspective illustrating the spatial relationships of major elements of the scanning force microscope of the invention;
FIG. 3 is a side view revealing the light beam path;
FIG. 4 is a side view showing the optimal detector location at three different angles of the light source means of the scanning force microscope of the invention;
FIG. 5 is a side view displaying the spatial relationships of major elements of the double membrane liquid cell.

As is illustrated in the drawings, the invention is embodied in an improved free standing type scanning force microscope **10** having a main body **12** which rests upon a lower base **14** by movable support means including screws or bolts **16**, with adjustable motor driven supports **18** for supporting the body **12** of the microscope on a substrate and moving the body **12** of the microscope in a vertical dimension relative to a specimen **17** mounted with respect to the substrate. Each of the motor driven supports **18** includes a screw driver motor **20** connected to a control unit (not shown), which coordinates the operation of the supports **18** in response to position signals from the optically encoded screw drive motors **20**, so that the motors **20** operate in unison to raise and lower the microscope uniformly. The specimen **17** to be examined can consist of a portion of the substrate, and can therefore in principle be of any size or weight.

The lower base **14** of the microscope typically has the general shape of a rectangular block, and supports the specimen **17**, the body **12** and the upper base **22**. The motorized adjustable supports **18** of the lower base **14** are preferably three in number, arranged in a tripod, although other numbers of supports **18** may also be possible. The length of extension of the supports **18** from the lower base **14** is preferably adjustable by screw drive motors **20** to which the supports **18** are mounted, with the supports **18** extending through bores to support the upper base **22**. The rectangular block of the upper base **22** may also include a bore for an objective lens or charge couple device extending through the block and focusing on the immediate vicinity of the probe tip **26** of the cantilever **28** and surface of the specimen **17**. A second bore may also be provided through the base to allow illumination for optically viewing the approach of the lower scanner **48** to the specimen **17**. A sensing means is preferably mounted to the under side of the upper base **22**. This attachment is provided by the X-Y pivot **30** which supports the scanning means below.

Scanning means **46** includes all elements below the X-Y pivot **30** including, at a minimum, the sensing means, movable supports including piezo drivers **42,44,** straddled support structure **24** and light source means **32.** A reflective cantilever **28** arm formed in the shape of a triangle from first and second arms is secured at one end to the free end of the integral cantilever support member and joined together at their free ends. The arms of the cantilever **28** are typically about 10-30 microns wide, about 100-200 microns long, about 0.5-5 microns thick, and are secured to the integral cantilever support member about 50-100 microns apart. Although the silicon nitride material from which the cantilever **28** is made is normally considered quite rigid, with these dimensions the cantilever bows and flexes as much as 20 degrees in response to the force of the probe tip **26** against the specimen **17**, amplifying the deflection of the light beam, as is explained further below. The reflective cantilever **28** is so small that it may be etched from silicon nitride, although other materials may also be used, such as silicon which can lend themselves to etching, fine machining, or other such processes familiar to those skilled in the art of manufacturing integrated circuit chips, and which can provide a reflective surface. Attached to the free end of the cantilever **28** is a probe means including a distal needle-like probe tip **26** adapted to contact and follow the surface contours of the specimen **17**.

A light source means **32**, such as a laser diode with associated optics, is mounted in the upper portion of the body **12** for producing a focused light beam directed at and reflected by the reflective cantilever **28**. One preferred laser diode, which is commercially available, is a three milliwatt laser diode which produces a beam in the 670 nm range. An opening is provided in the straddled superstructure **24** to allow the light beam to pass through to the cantilever **28**. A reflective means such as the planar mirror **34** is preferably mounted in the interior of the straddled superstructure **24** at a distal end of an adjustment screw through threaded access port to reflect the beam to the cantilever **28** and onwards to a photodetector **36** independently mounted in a photo-detector body for receiving the deflected light beam. The planar mirror **34** can be pivoted by means of an adjustment mechanism **38** which is a simple screw-pivot such that the beam moves along the Y dimension. The light source means **32** can also be adjusted by means of a second pivot **41** to move the light source means **32** in the X or horizontal direction.

The photodetector **36** preferably generates an electrical output signal in response to the deflected light beam indicative of the degree of deflection of the light beam from the straddled support structure **24**, and for generating the error signal indicative of a variance from the interaction forces between the probe **26** and the specimen's **17** surface. The photodetector **36** is mounted to receive the deflected light beam in a second body independent from the integral scanner/laser unit in which the stationary photodetector **36** is positioned at the light beam's tangent to the arc that is swept about the main pivot **30** in the Y-Z plane by the scanning means **46**. The photodetector **36** is typically formed as an array of four photosensors, in which the top pair is coupled to provide a combined signal, and the bottom pair is coupled to provide a combined signal. The deflected light beam is typically targeted at a central point between the top and bottom portions of the photodetector **36**, and the combined signals from these portions are processed to generate output signals which can be compared to produce a differential error signal by control means.

The mechanism for raster scanning the specimen **17** preferably includes a multiplicity of stacked piezo drivers **42** disposed in the scanning means **46** oriented horizontally at right angles to each other for X and Y raster scanning movements. A ten-to-one gain is achieved from the movement of the probe tip **26** relative to the X-Y direction piezo drivers **42**. The scanning means **46** in the vertical or Z dimension is controlled by a multiplicity of stacked piezo drivers **44** mounted vertically in a holder preferably made of aluminum, or Invar if thermal expansion effects are to be minimized. The piezo drivers **42, 44** are mounted to the upper end of the scanning means **46**, to provide for X, Y, and Z motion of the lower scanner **48**. At the cantilever **28**, the motion achievable with the piezo drivers **42, 44** typically ranges approximately from 0 to 20 microns in the vertical or Z direction, and approximately from 0 to 100 microns in the horizontal or X and Y dimensions. Depending upon the electronics circuitry which operates the piezo drivers it is possible to achieve motions with an atomic resolution as small as approximately 0.02 nanometers in the vertical dimension, and approximately 0.03 nanometers in the horizontal dimensions.

The scanning means **46** preferably also includes feedback control means for driving the piezo drivers **44** in the vertical dimension as the probe tip **26** traverses the contours of the specimen **17**, to maintain a substantially constant interaction forces between the probe and the specimen **17**. The control means preferably comprises microprocessor means (not shown) electrically connected to the photodetector **36** by line to receive the output signals indicative of deflection of the light beam from the straddled support structure **24,** and for generating the error signal indicative of a variance from the interactive forces between the probe tip **26** and the specimen **17** surface. The control means is electrically connected to the piezo drivers **42, 44** by control lines for raising and lowering the sensing means **46** with respect to the specimen **17** for raising or lowering the force of the probe tip **26** against the specimen **17** surface to maintain the substantially constant interaction of the probe tip **26** against the specimen **17** surface, and for raster scanning the specimen **17** in a horizontal plane in X and Y directions. The optically encoded screw drive motors **20** of the motor driven supports **18** are also connected to the control means by control lines enabling the control means to receive the optically encoded position signals from the drive motors **20** and to uniformly coordinate the operation of the drive motors **20** in raising and lowering the microscope **10**.

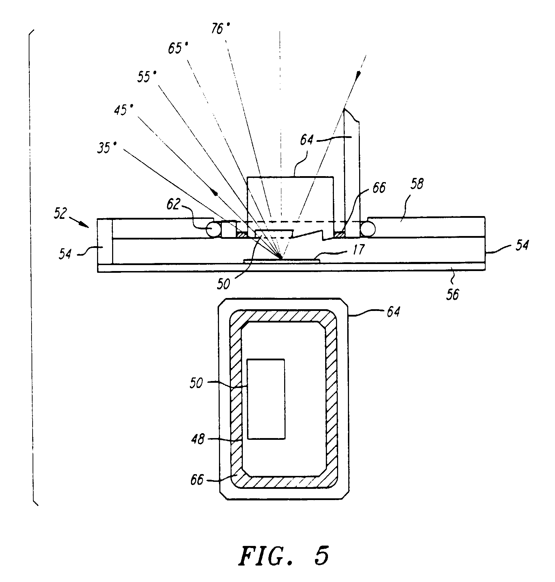

In one alternate preferred embodiment, illustrated in Fig. 5, the lower scanner **48** is fitted with an end piece or cap having a middle viewing tube secured to the cap at an upper end of the viewing tube and extending downwardly. The viewing tube is sealed at its lower end by a window **50** such as a thin pane of glass, to allow the lower end of the scanning means **46** to be placed in a liquid. The lower portion **48** of the scanning means **46** mates into the center of a double membraned liquid cell **52**. The cell **52** has container means for containing either liquid or gas comprising solid sides **54,** a solid bottom **56** and semi-open top **58**. The specimen **17** is placed upon a substrate **60** seated on the bottom **56** of the cell **52,** centrally located directly beneath the window **50**. Attached to either side of the semi-open top **58** are O-ring seals **62**, which are themselves attached to rigid supports **64**. The rigid supports **64** connect vertically to the body **12**. The lowermost tip of these vertical supports **64** are laterally connected to a deformable membrane or spacer **66**, which directly abuts the lower scanner **48** on either side. The liquid is therefore contained by the solid bottom **56**, solid sides **54,** semi-open top **58,** O-ring seals **62**, rigid supports **64**, deformable membrane or spacers **66** and lower scanner **48**.

The sensing means preferably consists of a probe tip **26** extending from the underside of the cantilever **28**, to be placed near or in contact with a specimen **17**, preferably mounted on a substrate **60** in a liquid environment. The remainder of the structure of the scanning force microscope **10** in this alternate embodiment is substantially identical to that of the previous embodiment. The lower scanner **48** can thus be submerged in the liquid environment for scanning of the stationary specimen **17** without special set-ups or adapters.

It has therefore been demonstrated that the scanning force microscope of the invention provides for an improved mount for the probe of the microscope, which is easier to handle and install in the microscope. The integrated optics of the microscope permits the user to view the approach of the lever arm and probe assembly to the surface of the specimen **17** to insure safe and precise positioning of the probe near the specimen **17**. The scanning force microscope also includes the capability of scanning a specimen **17** in a fluid environment, which can significantly improve the quality of the image of the specimen **17** produced by the instrument.

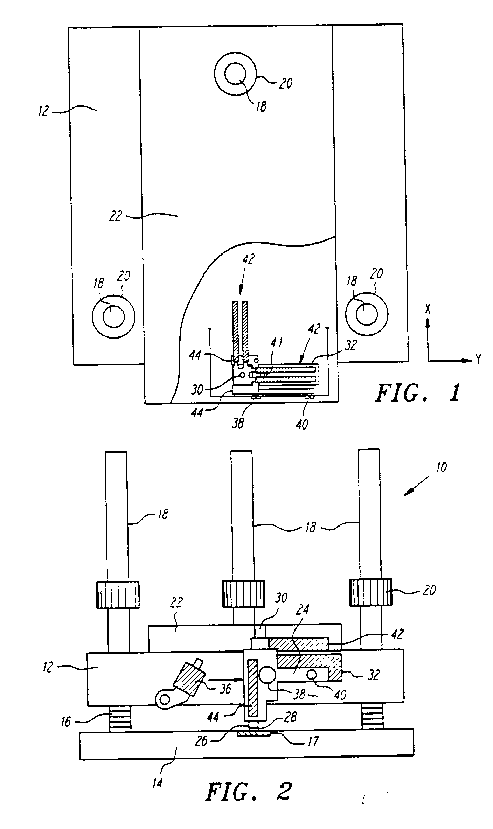

In FIG. 1, the plane of the drawing is the X-Y plane. Here, structure that is useful not only for a SFM, but also for other types of SPM including SFM in either contact, intermittent-contact or non-contact modes, scanning tunneling microscopy, electrochemistry AFM and STM, near-field scanning optical microscopy, scanning thermal microscopy, scanning magnetic force microscopy, scanning electrostatic microscopy and related techniques. The salient feature of this design is that within the scanning means **46** there are movable vertical structures which support and straddle the sensing means, including the probe. These are preferably a multiplicity of piezo transducer drivers **42** providing horizontal (X axis) and lateral (Y axis) movement to ensure rigidity, and with a multiplicity of piezo transducer drivers **44** to allow vertical (Z axis) movement of the structure relative to the specimen **17**.

In operation, the independently mounted photodetector **36**, can be moved horizontally and vertically, in the X and Z dimensions with respect to the specimen **17**. The three adjustable motor driven supports **18** of the scanning means **46** are also capable of simultaneous movement in the vertical dimension to facilitate the use of different scanner sizes. The scanning means **46** also incorporates horizontal (i.e., X, Y dimensions), and vertical (i.e., Z dimension) piezo drivers **42, 44** to allow raster scanning of the specimen **17**.

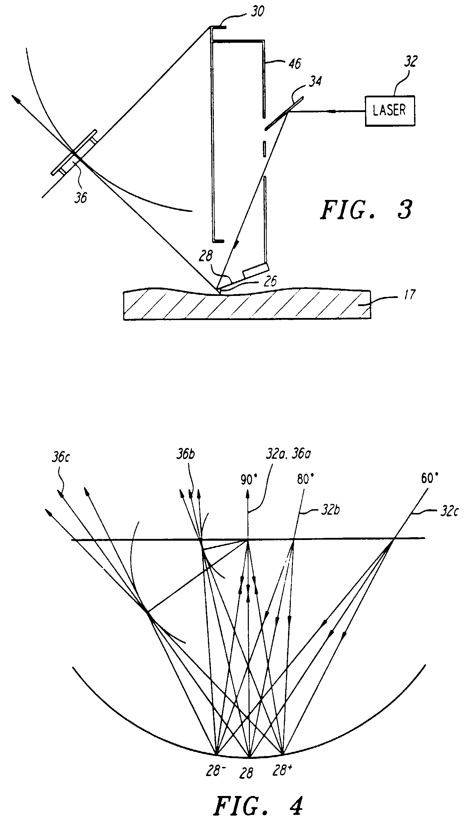

In FIG. 3, the light beam path is depicted in operation. The light source means **32** operates on the same pivot **30** as the cantilever **28,** ensuring that the light beam always remains focused upon the tip **26** of the cantilever **28**. The light beam emanating from the laser light source means **32** reflected by the planar mirror **34** onto the reflective surface is of the probe tip **26** of the cantilever **28**. The light source means **32** is integral with the pivoting X-Y scanning means **46** such that the beam always focuses onto the end of the cantilever **28**. The beam is then deflected from the probe tip **26** to the photodetector **36**.

The plane of the split photodetector **36** is positioned along the deflected beam at a particular distance from the cantilever **28**. The optimal position of the photodetector **36** is located at the beam's tangent to the arc that is swept about the pivot **30** of the scanning means **46**. There is a small error, as the deflected beam does move slightly as the scanning means **46** sweeps in an X-Y fashion. The maximum error at the "waist" of the beam has been calculated to be less than a few hundred angstroms equivalent of Z distance. In practice, the error seems to be less than that calculated.

In FIG. 4, the optimal photodetector **36** is depicted in locations for three arbitrary light source **32** locations. The plane of the drawing is the Y-Z plane (i.e. the plane in which the topography of the surface is monitored by the deflection of the cantilever **28**). Illustrated are the entrance angles onto the cantilever **28** are **90, 80** and **60** degrees. The source **32** location in terms of elevation is not material; the same elevation has been chosen for simplicity of illustration. Also for an example, the cantilever **28** angle is set to zero degrees. The light source means **32** moves on the same pivot **30** as the cantilever **28** and, therefore, is always directed onto the cantilever **28**.

The three cantilever **28** locations represent the limits of sweep (including midpoint) about the pivot **30**. This drawing is an exaggeration of the actual scanning means **46** motion, in which the sweep is +/- 50 microns above the specimen **17** and the pivot-cantilever distance is one inch.

The optimal photodetector **36** location is along the reflected beam at the "waist" of the apparent intersection of the three reflected beams. The beams do not truly intersect as the precise locations of the tangents to the arc about the pivot **30** point are slightly different. These optimal locations hold for both the X and Y scan directions in the plane of the specimen **17**.

The ideal situation is for the photodetector **36** to be located at the same elevation in Z, (i.e., located at the pivot **30**) as the source **32**. However, in the actual design, some compromises must be made in order to accommodate the actual mechanical components. Indeed, the more important direction is in the Y-Z plane because it is desirable to minimize the movement of the reflected beam onto the split photodetector **36** caused by the pivot-sweep effect. The X-Z plane is used to monitor torsional effects on the cantilever **28**, and these background effects can be more easily corrected mathematically. Therefore, the preferred arrangement is to locate the photodetector **36** at the same elevation in Z as the light beam's tangent to the arc about pivot **36**. In addition, the photodetector **36** is mounted in such a fashion as to allow it to be moved horizontally (along the X axis) in order to locate the photodetector **36** onto the optical path.

In FIG. 5, the plane of the drawing is the Y-Z plane. For illustrative purposes, an entrance beam at 65 degrees and resulting exit beam at 45 degrees are displayed. Also for illustration, the cantilever **28** angle is set to 10 degrees. In addition, a viewing angle of 76 degrees has been chosen for illustrative purposes only.

The specimen **17** is seated upon the bottom **56** of the cell **52**, which is filled with liquid. The liquid is contained by means of deformable membranes or spacers **66**. The light beam is deflected from the mirror **34** through the viewing window **50** onto the cantilever **28**, where it is deflected back up through the viewing window **50** and onto the stationary photodetector **36**.

Accordingly, it is apparent that the cantilever portion of the scanning means can be immersed in liquid to facilitate the scanning of biological specimens under physiological conditions, without the need for special adjustments or devices such as sealed liquid cells. In addition, because the pivot length is short, a standard high quality microscope may be placed at about ten degrees from vertical and adjacent to the scanner pivot in order to observe the specimen while making adjustments and during scanning. Furthermore, the invention has the additional advantages in that:
- specimens of any size may be viewed without causing distortion due to resonance effects from high scan rates
- the laser can be mounted and adjusted more easily
- the number of moving parts in the scanner is minimized
- the X, Y, and Z piezo drivers are protected from accidental damage
- convenient locations for making adjustments necessary for viewing the specimen are provided
- different scanners may be used despite the stationary detector.

It will be apparent from the foregoing that while particular forms of the invention have been illustrated and described, various modifications can be made without departing from the spirit and scope of the invention. Accordingly, it is not intended that the invention be limited, except as by the appended claims and their legal equivalents, rather than by the examples given.

## Claims

1. A structure for examining surface contours of a specimen by scanning probe microscopy including scanning force microscopy in either contact, intermittent-contact or non-contact modes, scanning tunnelling microscopy, electrochemistry AFM and STM, near-field scanning optical microscopy, scanning thermal microscopy, scanning magnetic force microscopy, scanning electrostatic microscopy and related techniques, comprising:
a main body;
scanning means mounted relative to the main body and movable in three degrees of freedom for scanning the specimen in two degrees of freedom in at least one specimen plane within which the specimen can be positioned;
the scanning means including a straddled support structure movably coupled relative to the main body; a sensing means for sensing surface contours of the specimen; and a pair of movable supports positioned adjacent to the straddled support structure and straddling the sensing means, the movable supports being coupled relative to the straddled support structure and to the sensing means for moving the sensing means in a vertical direction oriented substantially perpendicular to the specimen plane.

2. The structure of claim 1, wherein the movable supports comprise a spaced pair of Z-direction piezo drivers coupled to opposed sides of the straddled support structure and to the sensing means, the Z-direction piezo drivers straddling the sensing means.

3. The structure of claim 1 or claim 2, wherein the scanning means further comprises:
a light source means for generating an incident beam of light directed at the sensing means;
a photodetector means mounted relative to the main body for receiving deflected light beam deflected by the sensing means and generating an output signal indicative of a degree of deflection of the deflected light beam by the sensing means;
a feedback control means electrically coupled to the photodetector and to the movable supports for driving the movable supports in the vertical direction as the sensing means traverses surface contours of the specimen to maintain substantially constant interaction forces between the sensing means and the specimen.

4. The structure of any one of the preceding claims, further comprising:
a lower base;
a plurality of adjustable supports coupled relative to the lower base and the main body, the adjustable supports being synchronized together to position the lower base in a desired orientation relative to the main body, the adjustable supports being electrically coupled to the control means, with the control means operating the adjustable supports to automatically position the scanning means relative to the lower base.

5. The structure of any one of the preceding claims, further comprising viewing means secured relative to the main body for viewing a specimen from above.

6. The structure of claim 5, wherein the viewing means comprises a bore extending through the body and directed at the sensing means.

7. The structure of claim 6, wherein the viewing means comprises an objective optical lens focused on the sensing means.

8. The structure of any one of the preceding claims, wherein the scanning means further comprises a spaced pair of X-direction drivers coupled relative to the main body, with the X-direction drivers being coupled to opposed sides of the support structure; and a spaced pair of Y-direction drivers coupled relative to the main body, with the Y-direction drivers being coupled to opposed sides of the support structure; wherein the X-direction drivers are oriented perpendicular relative to the Y-direction drivers.

9. The structure of any one of the preceding claims, wherein the scanning means is movably mounted relative to the main body by a scanner pivot coupled relative to the scanning means and to the main body;
and wherein the scanning means further comprises a light source means for generating an incident light beam directed at the sensing means, the light source means being positioned adjacent and mounted to the straddled support structure such that the sensing means can be viewed from above and immediately adjacent to the scanner pivot.

10. A structure for examining surface contours of a specimen by scanning probe microscopy including scanning force microscopy in either contact, intermittent-contact or non-contact modes, scanning tunneling microscopy, electrochemistry AFM and STM, near-field scanning optical microscopy, scanning thermal microscopy, scanning magnetic force microscopy, scanning electrostatic microscopy and related techniques, comprising:
a main body;
scanning means mounted relative to the main body and movable in three degrees of freedom for scanning the specimen in two degrees of freedom in at least one specimen plane within which the specimen can be positioned;
the scanning means including a scanner pivot movably coupled relative to the main body; a support structure coupled relative to the scanner pivot; a sensing means for sensing surface contours of the specimen; a light source means for generating an incident beam of light directed at the sensing means; and a photodetector means mounted relative to the main body for receiving a deflected light beam deflected by the sensing means and generating an output indicative of a degree of deflection of the deflected light beam by the sensing means;
wherein the photodetector means is mounted relative to the main body and aligned approximately perpendicular to a tangent plane of an arc swept about the scanner pivot.

11. The structure of Claim 10, wherein the photodetector means is mounted within a plane oriented substantially perpendicular relative to the deflected light beam at an intersection of the deflected light beam and the arc.

12. The structure of Claim 10, wherein the photodetector means is mounted at an equal elevation from the specimen plane as a tangent point of the deflected light beam to the arc.

13. The structure of Claim 10, wherein the photodetector means is movably mounted in one degree of freedom along a horizontal axis oriented substantially parallel to the specimen plane.

14. A structure for examining surface contours of a specimen by scanning probe microscopy including scanning force microscopy in either contact, intermittent-contact or non-contact modes, scanning tunneling microscopy, electrochemistry AFM and STM, near-field scanning optical microscopy, scanning thermal microscopy, scanning magnetic force microscopy, scanning electrostatic microscopy and related techniques, comprising:
a main body;
scanning means mounted relative to the main body and movable in three degrees of freedom for scanning the specimen in two degrees of freedom in at least one specimen plane within which the specimen can be positioned;
the scanning means including a sensing means for sensing surface contours of the specimen; a light source means for generating an incident beam of light directed at the sensing means; and a photodetector means mounted relative to the main body for receiving a deflected light beam deflected by the sensing means and generating an output indicative of a degree of deflection of the deflected light beam by the sensing means;
a liquid cell means for sealing the specimen and at least a portion of the sensing means within liquids or gases and for permitting scanning movement of the sensing means relative to the liquid cell means and the specimen when the specimen is fixed relative to the liquid cell means.

15. The structure of Claim 14, wherein the liquid cell means comprises:
container means for supporting and containing the specimen within liquid or gases, the container means having a partially open top through which at least a portion of the sensing means extends;
a window means mounted relative to the scanning means for viewing the specimen when positioned within the container means and for allowing the incident and deflected light beams to respectively enter and exit the container means;
sealing means laterally attached to the scanning means on one end and attached to the partially open top for sealing liquids or gases within the container means.

16. The structure of Claim 15, wherein the sealing means comprises at least one seal which is sealingly abutted against a portion of the open top; at least one rigid support coupled relative to the main body and sealingly abutted with the seal; and at least one deformable membrane sealingly abutted with both the scanning means and the rigid support.

17. The structure of claim 15 or claim 16, wherein the window means comprises an end cap coupled to the scanning means; a middle viewing tube secured at an upper end thereof to the cap and extending downwardly therefrom; and a window mounted to a lower end of the viewing tube.

18. The structure of any one of claims 14 to 17, wherein the scanning means further comprises a scanner pivot movably coupled relative to the main body, and wherein the photodetector means is mounted relative to the main body and aligned approximately perpendicular to a tangent plane of an arc swept about the scanner pivot, the photodetector means further being mounted within a plane oriented substantially perpendicular relative to the deflected light beam at an intersection of the deflected light beam and the arc.

19. The structure of claim 18, wherein the photodetector means is mounted at an equal elevation from the specimen plane as a tangent point of the deflected light beam to the arc.

20. A structure for examining surface contours of a specimen by scanning probe microscopy including scanning force microscopy in either contact, intermittent-contact or non-contact modes, scanning tunneling microscopy, electrochemistry AFM and STM, near-field scanning optical microscopy, scanning thermal microscopy, scanning magnetic force microscopy, scanning electrostatic microscopy and related techniques, comprising:
a main body;
scanning means mounted relative to the main body and movable in three degrees of freedom for scanning the specimen in two degrees of freedom in at least one specimen plane within which the specimen can be positioned;
the scanning means including a scanner pivot movably coupled relative to the main body; a support structure coupled relative to the scanner pivot; a sensing means for sensing surface contours of the specimen; a light source means for generating an incident beam of light directed at the sensing means; and a photodetector means mounted relative to the main body for receiving a deflected light beam deflected by the sensing means and generating an output indicative of a degree of deflection of the deflected light beam by the sensing means;
a liquid cell means for sealing the specimen and at least a portion of the sensing means within liquids or gases and for permitting scanning movement of the sensing means relative to the liquid cell means and the specimen when the specimen is fixed relative to the liquid cell means;
a pair of movable supports positioned adjacent to the straddled support structure and straddling the sensing means, the movable supports being coupled relative to the straddled support structure and to the sensing means for moving the sensing means in a vertical direction oriented substantially perpendicular to the specimen plane;
said sensing means including an optical lever arm coupled relative to the movable supports and a probe tip mounted to the optical lever arm and adapted to interact with the surface or surface forces of the specimen;
a photodetector body mounted relative to the main body, the photodetector means being mounted within the photodetector body such that the photodetector means is aligned approximately perpendicular to a tangent plane of an arc swept about the scanner pivot the photodetector means being mounted such that it can move in one degree of freedom along a horizontal axis;
wherein the liquid cell means comprises a double membrane liquid cell including a container means for containing liquid or gases and for receiving a specimen to be immersed, the container means having a partially open top; a window means for viewing a specimen and for allowing the incident light beam to enter the container means onto the probe tip and the deflected light beam to exit the container means to the photodetector means; sealing means laterally attached at one end thereof to the scanning means, with another end of the sealing means being attached to the partially open top; rigid supports interposed between the sealing means and the scanning means; and deformable membrane means laterally attached to the rigid supports on one side and the scanning means on the other for sealing closed the container means.
